# FASCICULE DE BREVET EUROPEEN

(11) **EP 3 092 403 B1**
(45) Date de publication et mention de la délivrance du brevet: **18.06.2025**
(21) Numéro de dépôt: 14809919.5
(22) Date de dépôt: 14.11.2014
(51) Int. Cl.: F02P 5/152, F02M 26/00, F02D 35/02, F02D 41/22, F02D 37/02, F02M 26/49, F02D 41/00, F02P 5/15

(54) **PROCÉDÉ DE CONTRÔLE DU FONCTIONNEMENT D'UNE VANNE DE RECIRCULATION DES GAZ D'ÉCHAPPEMENT ET MOTEUR À COMBUSTION INTERNE**
VERFAHREN ZUR STEUERUNG DES BETRIEBS EINES ABGASRÜCKFÜHRVENTILS UND VERBRENNUNGSMOTOR
METHOD FOR CONTROLLING THE OPERATION OF AN EXHAUST GAS RECIRCULATION VALVE AND INTERNAL COMBUSTION ENGINE

(30) Priorité: 12.12.2013 FR 1362476
(43) Date de publication de la demande: 16.11.2016
(73) Titulaire: NEW H POWERTRAIN HOLDING, S.L.U., 47008 Valladolid (ES)
(72) Inventeur: AVONS, Vincent-Pierre, F-75014 Paris (FR); HARTER, Cedric, F-91150 Etampes (FR)
(74) Mandataire: Renault Group
(86) Numéro de dépôt international: PCT/FR2014/052902
(87) Numéro de publication internationale: WO 2015/086936

(56) Documents cités:
- DE-A1- 3 934 017
- US-A- 5 639 961

## Description

La présente invention concerne un dispositif et un procédé de contrôle de l'état fonctionnel d'un dispositif de recirculation des gaz d'échappement dans un moteur à allumage commandé, et plus particulièrement de contrôle d'une défaillance de l'ouverture et de la fermeture de la vanne de commande de recirculation des gaz d'échappement.

La technologie de recirculation des gaz d'échappement, autrement appelée « Exhausted Gas Recirculation » (EGR), appliquée sur des moteurs à allumage commandé, permet d'augmenter la résistance au cliquetis du moteur. Le cliquetis est une auto-inflammation, instantanée et en masse, d'une partie du mélange non encore brûlé, porté à température et pression élevées par le mouvement du piston et par le dégagement d'énergie dû à la propagation du front de flamme. Il en résulte une augmentation locale de pression, suivie de vibrations de la masse gazeuse. Ce dernier entraîne des contraintes mécaniques et thermiques trop sévères, pouvant générer des incidents destructifs graves : rupture du joint de culasse, grippage ou fusion partielle du piston, détérioration de la culasse et des soupapes. Le risque de cliquetis est augmenté lorsqu'on applique une trop grande avance à l'allumage ou que le rapport volumétrique de compression du moteur est trop important. La technologie de recirculation des gaz d'échappement, en atténuant le risque de cliquetis, permet d'augmenter l'avance à l'allumage et le rapport volumétrique de compression du moteur. Il en résulte une amélioration du rendement du cycle moteur.

On connaît donc des systèmes de recirculation des gaz d'échappement, comprenant une conduite de recirculation disposée entre la conduite d'échappement et la conduite d'admission du moteur, au moyen de laquelle peut circuler une partie des gaz d'échappement. Afin de contrôler la quantité de gaz d'échappement introduite dans le mélange injecté dans le moteur, les systèmes de recirculation connus sont dotés d'une vanne de commande de recirculation des gaz.

Une telle vanne n'apporte toutefois pas pleinement satisfaction, étant donné qu'elle évolue dans un environnement difficile, pouvant entraîner l'encrassement et le colmatage de celle-ci par des hydrocarbures huileux. En particulier, le blocage en position ouverte de la vanne de commande occasionne une perte de puissance, des défauts d'accélération, et occasionnellement fumées et ratés moteur.

Le document US 5 639 961 A décrit un procédé de détection de défauts d'un dispositif de recirculation des gaz d'échappement d'un moteur à combustion interne.

Au vu de ce qui précède, le but de l'invention est de proposer un dispositif de contrôle apte à détecter le blocage de la vanne de recirculation des gaz d'échappement.

L'invention a donc pour objet un procédé de contrôle d'un moteur à combustion interne à allumage commandé pour détecter une défaillance d'une vanne de recirculation des gaz d'échappement.

Le procédé de contrôle comprend les étapes suivantes :
a) on modifie la position d'une vanne de commande de recirculation des gaz d'échappement,
b) on calcule au moyen d'une cartographie l'avance à l'allumage théorique en fonction du régime du moteur et de la charge du moteur sans tenir compte d'une recirculation des gaz d'échappement,
c) on détermine au moyen d'un dispositif de gestion de l'avance à l'allumage une avance à l'allumage optimale, l'avance à l'allumage optimale déterminée étant l'avance à l'allumage la plus élevée avant détection d'un phénomène de cliquetis dans le moteur obtenu d'un capteur de cliquetis,
d) on calcule un critère de diagnostic, à partir de l'avance à l'allumage théorique et de l'avance à l'allumage optimale, et
e) on compare le critère de diagnostic à un seuil de défaillance de la vanne de commande à partir des moyens de comparaison, les moyens de comparaison comprenant une pluralité de seuils de défaillance en fonction de la position d'ouverture de la vanne.

Dans un mode de mise en œuvre, le procédé comprend en outre une première étape dans laquelle on détecte si des conditions du diagnostic sont réunies, les conditions de diagnostic comprenant au moins une condition choisie parmi une condition portant sur le régime moteur qui doit être sensiblement constant pendant une durée prédéfinie, et une condition sur la charge du moteur qui doit être sensiblement constante pendant une durée prédéfinie.

Avantageusement, un dispositif de contrôle étant doté de moyens d'itération, le procédé comprend les phases suivantes :
h) on remet à zéro le compteur,
i) on modifie la position de la vanne de commande, on calcule au moyen de la cartographie l'avance à l'allumage théorique en fonction du régime du moteur et de la charge du moteur sans tenir compte d'une recirculation des gaz d'échappement, on détermine au moyen du dispositif de gestion de l'avance à l'allumage une avance à l'allumage optimale, l'avance à l'allumage optimale déterminée étant l'avance à l'allumage la plus élevée avant détection d'un phénomène de cliquetis dans le moteur, et on calcule un critère de diagnostic, à partir de l'avance à l'allumage théorique et de l'avance à l'allumage optimale,
j) on mémorise la valeur du critère de diagnostic obtenu lors de la phase i),
k) on incrémente la valeur retenue par le compteur d'une valeur,
l) on compare la valeur retenue par le compteur au nombre d'itérations, s'il est inférieur ou égal au nombre d'itérations, on retourne à la phase i),
m) on calcule la moyenne des critères de diagnostic mémorisés lors des phases j), et
n) on compare la moyenne de la phase m) avec le seuil de défaillance de la vanne de commande.

Dans un mode de mise en œuvre, le dispositif de contrôle comprend en outre des moyens d'affichage, le procédé de contrôle comprenant une dernière étape dans laquelle on signale une défaillance de la vanne de commande, à l'aide des moyens d'affichage, si le critère de diagnostic dépasse le seuil de défaillance.

Avantageusement, le dispositif de gestion de l'avance à l'allumage comprend un capteur de cliquetis apte à détecter l'apparition d'un phénomène de cliquetis dans le moteur. En outre, l'étape d) comprend les sous-étapes suivantes :
p) on détermine une avance à l'allumage initiale, à partir de la quantité de gaz d'échappement introduite dans la conduite d'admission, et on l'applique à la bougie d'allumage,
q) si le capteur détecte la présence d'un phénomène de cliquetis, on passe directement à la sous-étape t),
r) on augmente l'avance à l'allumage appliquée d'une valeur prédéfinie, et on applique cette nouvelle avance à l'allumage au moteur,
s) on retourne à la sous-étape q), et
t) on maintient l'avance à l'allumage appliquée inchangée, et on définit l'avance à l'allumage optimale comme étant égale à cette valeur.

L'invention a aussi pour objet un moteur à combustion interne comprenant au moins une bougie d'allumage, un dispositif de gestion de l'avance à l'allumage pour déterminer et appliquer une avance à l'allumage optimale de la bougie d'allumage, le dispositif de gestion de l'avance à l'allumage comprenant un capteur de cliquetis apte à détecter l'apparition d'un phénomène de cliquetis dans le moteur, l'avance à l'allumage optimale déterminée par le dispositif de gestion étant l'avance à l'allumage la plus élevée avant détection par le capteur de cliquetis d'un phénomène de cliquetis dans le moteur, un dispositif de recirculation des gaz d'échappement équipé d'une vanne de commande de recirculation des gaz, un dispositif de contrôle comprenant :
- des premiers moyens d'actionnement configurés pour forcer l'ouverture et la fermeture de la vanne de commande, et
- une cartographie dans laquelle sont stockées des valeurs d'avance à l'allumage théorique en fonction du régime du moteur et de la charge du moteur sans tenir compte d'une recirculation des gaz d'échappement,
- des premiers moyens de calcul configurés pour exécuter les étapes du procédé tel que défini ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente un schéma de fonctionnement d'un dispositif de contrôle pour un moteur à allumage commandé doté d'un dispositif de recirculation des gaz d'échappement selon un mode de réalisation de l'invention,
- la figure 2 représente un schéma de fonctionnement détaillé des moyens d'itération du dispositif de contrôle de la figure 1,
- la figure 3 représente un procédé de contrôle comprenant plusieurs itérations selon un mode de réalisation de l'invention,
- la figure 4 représente le détail d'une itération du procédé de contrôle de la figure 3, et
- la figure 5 représente le détail de l'étape de calcul de l'avance à l'allumage du procédé de contrôle de la figure 3.

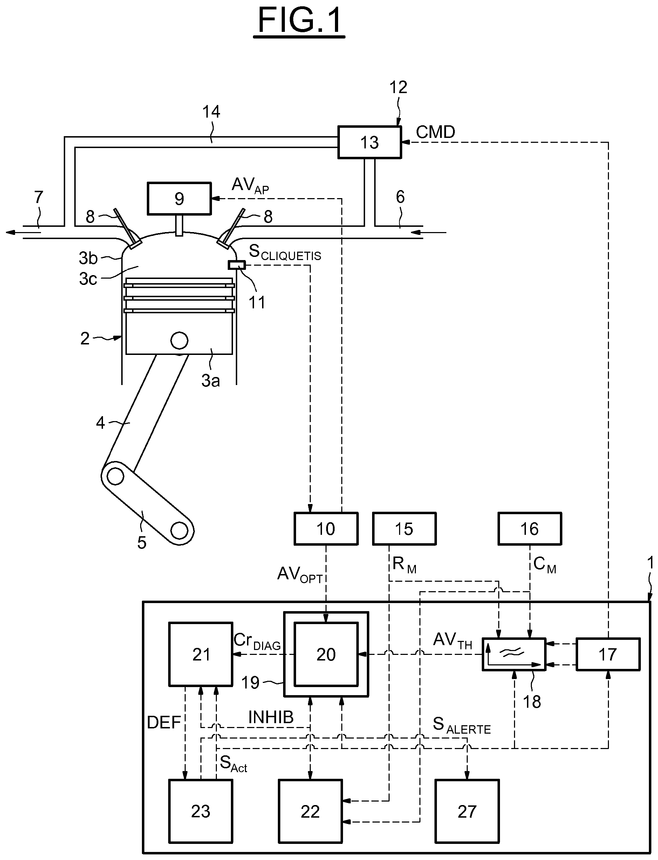

On se référera tout d'abord à la figure 1 qui représente un schéma de fonctionnement d'un dispositif 1 de contrôle pour un moteur à combustion 2.

Le moteur à combustion 2 comprend un piston 3a coulissant dans un cylindre 3b, délimitant une chambre de combustion 3c. Le piston 3a est lié à une bielle 4 liée à un vilebrequin 5. Le moteur 2 comprend en outre une conduite d'admission 6 et une conduite d'échappement 7, lesdites conduites communiquant avec la chambre de combustion 3c. Le moteur est doté de deux soupapes 8 aptes à obstruer les orifices des conduites 6 et 7. Le moteur comprend également une bougie d'allumage 9.

L'allumage de la bougie d'allumage 9 est commandé par un dispositif de gestion de l'avance à l'allumage 10, au moyen duquel est appliquée une avance à l'allumage AV_{AP}. Le dispositif de gestion 10 est muni d'un capteur de cliquetis 11, apte à détecter l'apparition d'un phénomène de cliquetis dans le moteur 2. Le dispositif de gestion 10 a pour fonction de calculer une avance à l'allumage optimale AV_{OPT}, c'est-à-dire l'avance à l'allumage appliquée AV_{AP} la plus importante qui écarte le risque de cliquetis. Concrètement, le dispositif de gestion 10 teste plusieurs valeurs d'avance à l'allumage appliquées AV_{AP}, détecte ou non le signal S_{CLIQUETIS} de détection de cliquetis par le capteur 11 et détermine une avance à l'allumage optimale AV_{OPT}.

Le moteur 2 comprend en outre un dispositif de recirculation 12 des gaz d'échappement, comprenant une conduite 14 de recirculation des gaz, piquée d'un côté sur la conduite d'échappement 7, de l'autre côté sur la conduite d'admission 6. La conduite 14 est dotée d'une vanne de commande 13 de recirculation des gaz de manière à contrôler la quantité de gaz d'échappement injectée dans l'air admis dans la chambre de combustion 3c.

Le moteur 2 est également doté de premiers moyens de mesure 15 de sa vitesse de rotation R_{M} et de deuxièmes moyens de mesure 16 de sa charge C_{M}.

Le dispositif de contrôle 1 comprend des premiers moyens d'actionnement 17, aptes à régler l'ouverture de la vanne de commande 13, en émettant un signal variable CMD. Il comprend également une cartographie 18, dans laquelle sont stockées des valeurs d'une avance à l'allumage théorique AV_{TH} en fonction des signaux de régime du moteur R_{M} et de charge du moteur C_{M}, délivrés respectivement par les premiers moyens de mesure 15 et par les seconds moyens de mesure 16, sans tenir compte d'une recirculation des gaz d'échappement.

Le dispositif comprend en outre des premiers moyens de calcul 19, au moyen desquels on émet un critère de diagnostic Cr_{DIAG} de l'état fonctionnel de la vanne de commande 13. Pour ce faire, les moyens de calcul 19 collectent le signal d'avance à l'allumage optimal AV_{OPT} déterminé par le dispositif de gestion 10 et le signal d'avance à l'allumage théorique AV_{TH} déterminé par la cartographie 18. Un comparateur 20 calcule la différence entre les deux signaux AV_{OPT} et AV_{TH}, appelée critère de diagnostic Cr_{DIAG}. L'avance à l'allumage théorique AV_{TH} étant calculée à partir des seuls signaux de régime R_{M} et de charge C_{M} du moteur, on considère qu'elle est l'avance à l'allumage optimale dans le cas où la vanne de commande est fermée.

Ainsi, en comparant pour un même point de fonctionnement du moteur l'avance à l'allumage optimale AV_{OPT} et l'avance à l'allumage théorique AV_{TH}, on peut avoir une indication sur une défaillance de la vanne de commande 13. Par exemple, si l'ordre est donné à la vanne de commande 13 d'être fermée, la valeur de l'avance à l'allumage optimale AV_{OPT} devra sensiblement être égale à celle de l'avance à l'allumage théorique AV_{TH}. En d'autres termes, le critère de diagnostic Cr_{DIAG} est sensiblement nul. Si tel n'est pas le cas, s'il dépasse un certain seuil, il y a une défaillance du système de fermeture et d'ouverture de la vanne de commande 13. Dans un autre cas de figure, on peut donner ordre à la vanne de commande 13 d'être à l'état ouvert. On compare le critère de diagnostic Cr_{DIAG} à un seuil de non-défaillance S_{NONDEF}. Si Cr_{DIAG} ne dépasse pas le seuil de non-défaillance, c'est que l'avance à l'allumage optimale AV_{OPT} dans ce cas où la vanne 13 est ouverte est trop proche de l'avance à l'allumage théorique AV_{TH}, et donc qu'il y a défaillance de la vanne de commande 13.

Le dispositif de contrôle 1 comprend à cet égard des moyens de comparaison 21 pour comparer le critère de diagnostic Cr_{DIAG} à plusieurs seuils tels que le seuil de non-défaillance S_{NONDEF} évoqué précédemment. Plusieurs situations de contrôle existent, par exemple, en position ouverte, fermée, semi-ouverte... Les moyens de comparaison 21 comprennent pour chaque situation un seuil de défaillance ou un seuil de non-défaillance approprié pour détecter lors de ladite situation une défaillance de la vanne de commande 13. Les moyens de comparaison 21 sont aptes à émettre un signal DEF de détection d'une défaillance. En cas de défaillance, le signal DEF est égal à 1, il est égal à 0 dans le cas contraire.

Le dispositif 1 peut diagnostiquer l'état de fonctionnement de la vanne de commande 13 lorsque des conditions de diagnostic sont réunies, à savoir pour tout point de fonctionnement du moteur, à la condition que régime et charge du moteur soit stables durant une période de l'ordre de grandeur du temps nécessaire pour contrôler l'état de fonctionnement de la vanne de commande 13. Le dispositif de contrôle 1 est également doté de seconds moyens de calcul 22 qui ont pour fonction de détecter si ces conditions de diagnostic sont réunies. Les moyens de calcul 22 émettent, si les conditions ne sont pas appropriées au diagnostic, un signal d'inhibition INHIB adressé aux moyens de calcul 19 et aux moyens de comparaison 21. De cette façon, les moyens de calcul 22 empêchent le calcul et l'envoi du signal de critère de diagnostic Cr_{DIAG} et empêchent l'émission du signal DEF de détection d'une défaillance. Pour déterminer si le signal INHIB doit ou non être envoyé, les seconds moyens de calcul 22 analysent les signaux de régime moteur R_{M} et de charge moteur C_{M} sur une durée T_{ech} d'échantillonnage. Les seconds moyens de calcul 22 sont notamment aptes à détecter si lesdits signaux R_{M} et C_{M} ne varient pas respectivement au-delà d'une tolérance de variation du régime du moteur εᵣ et d'une tolérance de variation de la charge du moteur ε_{c}, sur la durée T_{ech}.

Le dispositif 1 comprend en outre des moyens d'itération 23, permettant la réalisation de plusieurs vérifications de l'état de fonctionnement de la vanne de commande 13. Il en résulte une meilleure fiabilité du dispositif de contrôle. Ces moyens d'itération 23 sont donc aptes à interagir avec les moyens d'actionnement 17, la cartographie 18, les moyens de calcul 19 et les moyens de comparaison 21 pour contrôler à plusieurs reprises la valeur du signal DEF. Ils calculent ensuite un signal d'alerte S_{ALERTE} adressé à des moyens d'affichage 27, au moyen desquels le conducteur est averti d'une défaillance dans le dispositif de recirculation 12 des gaz d'échappement de son véhicule.

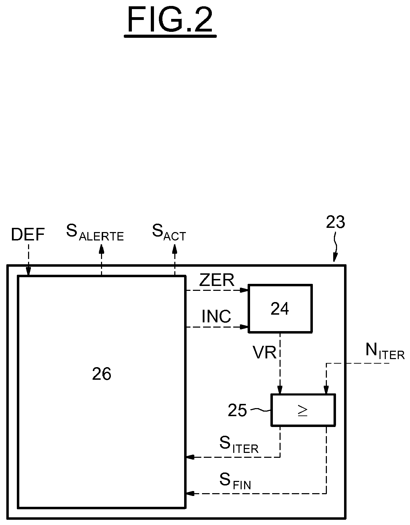

La figure 2 représente le détail des moyens d'itération 23. Les moyens 23 permettent d'effectuer plusieurs itérations du contrôle de l'état de fonctionnement de la vanne de commande 13 pour générer un signal d'alerte de défaillance plus fiable. Les moyens 23 sont à cet égard aptes à recevoir le signal DEF de détection d'une défaillance et un signal N_{ITER}. Ce dernier signal correspond au nombre d'itérations souhaitées avant l'émission d'une alerte de défaillance de l'état de fonctionnement de la vanne de commande. Il est un paramètre prédéterminé et intégré dans le système par le constructeur du véhicule automobile. Les moyens 23 sont dotés d'un compteur 24, d'un second comparateur 25, et de troisièmes moyens de calcul 26.

Le compteur 24 a pour fonction de compter le nombre d'itérations déjà réalisées depuis un instant d'initialisation. Ainsi, lors de l'activation du dispositif de contrôle, et à l'issue de chacune des itérations, les moyens de calcul 26 envoient respectivement au compteur 24 un signal ZER et un signal INC. Le compteur 24 est apte à déterminer et mémoriser une valeur retenue VR. Lorsque le compteur 24 reçoit le signal ZER, il met à zéro celle-ci. Chaque fois qu'il reçoit le signal INC, il l'incrémente d'une unité et émet ponctuellement le signal VR à l'adresse d'un comparateur 25.

Le comparateur 25 compare la valeur retenue VR et le nombre d'itérations N_{ITER}, et génère un signal S_{ITER} ou un signal S_{FIN}. Tant que VR est strictement inférieure à N_{ITER}, le signal généré est S_{ITER}. Dès qu'on a égalité des deux signaux VR et N_{ITER}, ou si le signal N_{ITER} est supérieur à la valeur retenue VR, le signal émis est S_{FIN}.

Les moyens de calcul 26 sont aptes à envoyer un signal d'activation S_{ACT} aux moyens d'actionnement 17, à la cartographie 18, aux moyens de calcul 19 et aux moyens de comparaison 21 afin d'entraîner le contrôle de l'état de fonctionnement de la vanne de commande 13. Il en résulte la valeur du signal DEF, recueilli par les moyens 26. Lors de la réception du signal DEF, les moyens 26 émettent le signal INC à l'adresse du compteur 24.

On rappelle que les moyens de calcul 26 traitent les signaux S_{ITER} et S_{FIN} émis par le comparateur 25. D'une part, lorsque le signal S_{ITER} est émis par le comparateur 25, les moyens 26 émettent le signal S_{ACT}, retiennent la valeur du signal DEF dans une mémoire de stockage, puis émettent le signal INC. D'autre part, lorsqu'ils reçoivent le signal S_{FIN}, les moyens de calcul 26 font le calcul de la moyenne de l'ensemble des signaux DEF mémorisés par la mémoire de stockage. Ils la comparent à une valeur de seuil d'alerte et émettent le signal d'alerte S_{ALERTE} si la moyenne dépasse le seuil.

Il ne peut alors plus y avoir d'itérations et le contrôle de l'état de fonctionnement de la vanne de contrôle 13 est terminé. Pour recommencer un contrôle, les moyens de calcul 26 émettent le signal ZER.

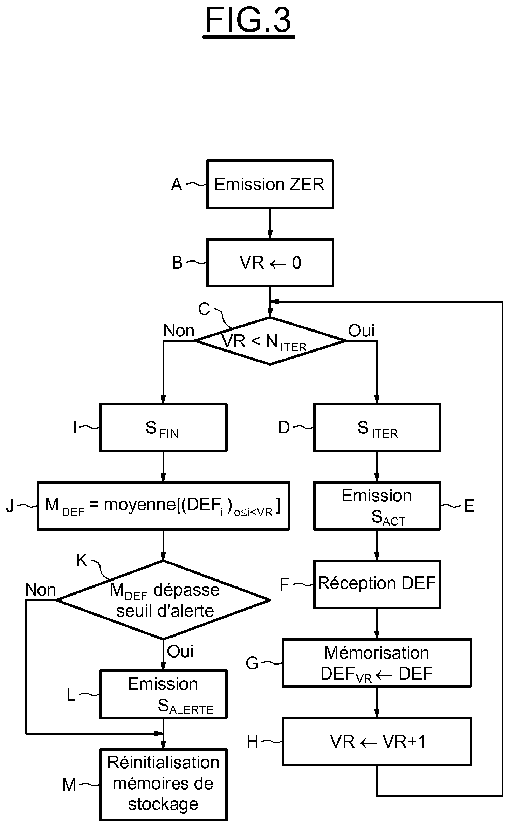

La figure 3 représente un procédé de contrôle d'un moteur à combustion interne comprenant plusieurs itérations, au moyen d'un dispositif tel que le dispositif de contrôle de la figure 1.

Le procédé de contrôle débute par une première phase A dans laquelle est émis le signal ZER. Cette phase peut être réalisée grâce aux troisièmes moyens de calcul 26 des moyens d'itération 23 du dispositif de contrôle. Elle est déclenchée par l'ordinateur de bord du véhicule automobile.

Cette phase A entraîne automatiquement une phase B, dans laquelle la variable VR retenue dans le compteur 24 prend la valeur 0.

S'ensuit alors une phase de test C, au cours de laquelle sont comparés au moyen du comparateur 25, la valeur retenue VR et le nombre d'itérations N_{ITER} préprogrammé. Dans cet exemple, N_{ITER} = 10, tandis que VR = 0. On a donc VR < N_{ITER}. On applique par conséquent les phases de la branche associée à la réponse « OUI ».

On applique par conséquent une phase D consistant à émettre le signal S_{ITER}. Cette phase D entraîne une phase E réalisée par les moyens de calcul 26. Au cours de cette phase E, le signal d'activation S_{ACT} est envoyé aux moyens d'actionnement 17, à la cartographie 18, aux moyens de calcul 19 et aux moyens de comparaison 21. Il en résulte un fonctionnement de ces quatre composants de sorte que l'on effectue un contrôle de la vanne de commande 13. Au terme de cette phase, le signal DEF est égal à 1 si l'on détecte une défaillance, 0 dans le cas contraire. Au cours d'une phase F suivante, on recueille le signal DEF.

La phase G qui suit consiste à stocker la valeur du signal DEF dans la mémoire de stockage. Dans cet exemple, la valeur du signal DEF est associée à la variable DEF_{VR}, c'est-à-dire DEF₀ dans le cas présent.

Au cours de la phase H, on incrémente la valeur de VR d'une unité, c'est-à-dire qu'on calcule le résultat de l'opération VR + 1, puis on l'associe à la variable VR. Cet enchaînement des phases C à H est appelé une itération. A l'issue de cette première itération, on a donc VR = 1.

Comme on le voit sur la figure 3, on répète alors la phase C. Etant donné que la valeur de VR est 1, on répond à la question « VR < N_{ITER} ?» par l'affirmative, et on applique les phases D, E, F, G et H, en tout point comme elles ont été décrites, à la différence près que la valeur VR est égale à 1 jusqu'à la phase H. Au cours de la phase H, cette valeur est devenue 2 et on a stocké une valeur DEF₁.

On applique ces phases jusqu'à la dixième itération à l'issue de laquelle on a VR = 10. La réponse à la question de la phase C est donc non, et on passe à une phase I, qui consiste à émettre le signal S_{FIN}.

Cela déclenche la phase J qui consiste en le calcul de la moyenne de la liste des valeurs DEFᵢ mémorisées, c'est-à-dire la liste de dix valeurs {DEFᵢ / 0 ≤ i < 9}, par les moyens de calcul 26.

Au cours de la phase de test K, on compare cette moyenne avec une valeur de seuil prédéfinie, par exemple 0,7. Si la réponse est oui, on passe à une phase L suivie d'une phase M. Si la réponse est non, on passe directement à cette phase M.

La phase L consiste à émettre un signal d'alerte S_{ALERTE} adressé aux moyens d'affichage 27.

La phase M suivante consiste à effacer toutes les valeurs en mémoire, en particulier VR et les DEFᵢ.

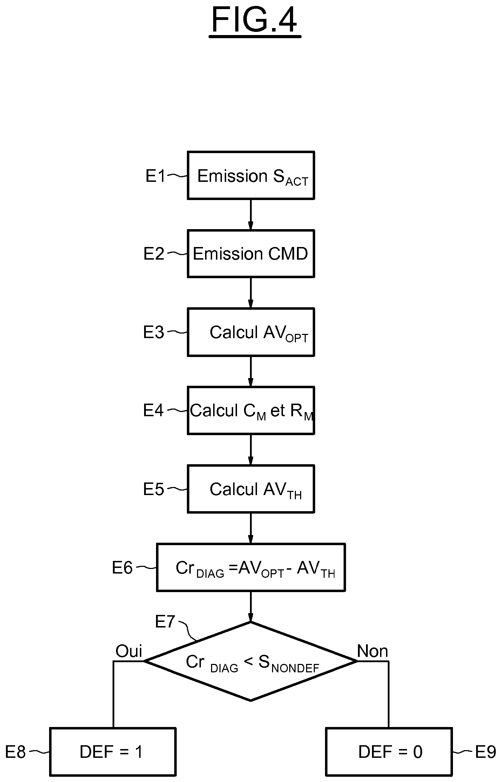

La figure 4 représente le détail de la phase E du procédé de la figure 3. On rappelle que cette phase consiste en l'émission du signal S_{ACT} par les moyens d'itération 23, adressé aux moyens d'actionnement 17, à la cartographie 18, aux moyens de calcul 19 et aux moyens de comparaison 21. Cela entraîne un lot de conséquences résultant en une valeur du signal DEF de détection d'une défaillance de la vanne de contrôle 13.

La phase E commence donc par l'étape E1 d'émission du signal S_{ACT}. Cette étape est suivie d'une étape E2 consistant à forcer l'ouverture ou la fermeture de la vanne de commande 13 en émettant le signal CMD, à partir des moyens d'actionnement 17. Dans cet exemple, on provoque l'ouverture de la vanne de commande 13.

L'étape E3 suivante consiste en le calcul de l'avance à l'allumage optimale AV_{OPT}. Ce calcul se fait au moyen du dispositif de gestion de l'avance à l'allumage 10. L'avance à l'allumage optimale AV_{OPT} est par ailleurs appliquée à la bougie d'allumage 9.

Au cours de l'étape E4, on mesure le régime et la charge du moteur R_{M} et C_{M}. On utilise à cet égard les capteurs 15 et 16. L'étape E5 consiste ensuite à utiliser les valeurs de R_{M} et C_{M} mesurées pour calculer l'avance à l'allumage théorique AV_{TH}, puis l'étape E6 a pour but de calculer le critère de diagnostic Cr_{DIAG}, dans notre exemple égal à la différence entre l'avance à l'allumage optimal AV_{OPT} et l'avance à l'allumage théorique AV_{TH}.

On passe alors à une étape de test E7, au cours de laquelle on pose la question Cr_{DIAG} < S_{NONDEF}. On rappelle que S_{NONDEF} est le seuil de non-défaillance, et qu'il y a défaillance de la vanne de commande 13 si le critère de diagnostic Cr_{DIAG} est inférieur au seuil S_{NONDEF}. Par conséquent, si la réponse est « OUI », alors on passe à une étape E8 au cours de laquelle la valeur du signal DEF devient 1. Si la réponse est « NON », on applique une étape E9 au cours de laquelle la valeur du signal DEF devient 0.

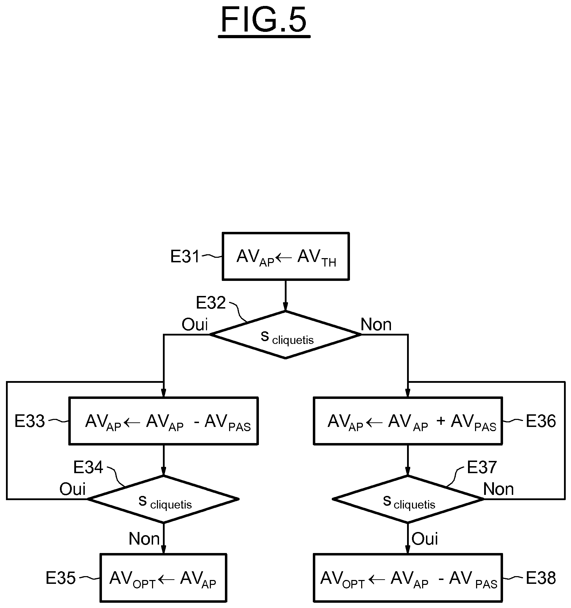

La figure 5 illustre le procédé d'obtention du signal d'avance à l'allumage optimal AV_{OPT} au moyen du dispositif de gestion 10, dans l'étape E3 de la phase E du procédé de la figure 3.

Cette étape commence par une sous-étape E31 consistant à déterminer une valeur de l'avance à l'allumage appliquée AV_{AP}. Dans cet exemple, on utilise la valeur de l'avance à l'allumage théorique AV_{TH} calculée par la cartographie 18.

On applique ensuite une sous-étape de test E32, au moyen du capteur de cliquetis 11 du dispositif de gestion 10 de l'avance à l'allumage. Cette sous-étape consiste à détecter s'il y a ou non apparition d'un phénomène de cliquetis. Si oui, on applique une sous-étape E33. Sinon, on applique une sous-étape E36.

L'avance à l'allumage théorique AV_{TH} correspondant à une avance à l'allumage adaptée aux conditions de fonctionnement du moteur sans recirculation des gaz, on remarquera qu'il est peu probable que le cliquetis apparaisse dès l'étape E32. L'objectif est de garder de la marge par rapport au phénomène nuisible de cliquetis, avant d'augmenter progressivement l'avance à l'allumage appliquée AV_{AP}.

La sous-étape E33 consiste à calculer le résultat de l'opération AV_{AP} - AV_{PAS}, où AV_{PAS} correspond au pas de variation de l'avance à l'allumage, dont la valeur est prédéfinie et intégrée dans le dispositif par le constructeur du véhicule automobile. Le résultat de l'opération est alors mémorisé dans la variable d'avance à l'allumage AV_{AP} appliquée à la bougie 9. La sous-étape de test E34 suivante consiste à détecter la présence de cliquetis dans le moteur, toujours au moyen du capteur 11. Si on détecte un phénomène de cliquetis, on répète la sous-étape E33. Sinon, on passe à une sous-étape E35. Cette sous-étape E35 consiste à donner à la variable AV_{OPT} la valeur de l'avance à l'allumage appliquée AV_{AP}, lors de la dernière activation de la sous-étape E34.

La sous-étape E36 consiste, de manière symétrique, à calculer le résultat de l'opération AV_{AP} + AV_{PAS}, et à mémoriser ce résultat dans la variable AV_{AP}. S'ensuit une nouvelle sous-étape de test E37, dans laquelle on pose la question de savoir s'il y a ou non apparition du phénomène de cliquetis. Si le cliquetis n'est pas détecté, on recommence la sous-étape E34. Si on détecte l'apparition du phénomène de cliquetis, on passe à une sous-étape E38. Celle-ci consiste à donner à la variable AV_{OPT} la valeur du résultat de l'opération AV_{AP} - AV_{PAS}.

De cette manière, qu'il y ait lors de l'étape E32 détection ou non du phénomène de cliquetis, l'avance à l'allumage optimale AV_{OPT} est toujours la valeur d'avance à l'allumage appliquée AV_{AP} la plus grande possible, tout en évitant la présence de cliquetis.

Ainsi, au moyen d'un dispositif de contrôle tel que celui décrit précédemment, il est possible de détecter une défaillance de la vanne de commande du dispositif de recirculation des gaz d'échappement d'un moteur à allumage commandé, et ce quel que soit le point de fonctionnement. Un tel dispositif présente en outre l'avantage de ne pas nécessiter de capteur supplémentaire puisqu'il utilise des capteurs généralement déjà existants dans la plupart des véhicules automobiles.

## Revendications

1. Procédé de contrôle d'un moteur à combustion interne à allumage commandé pour détecter une défaillance d'une vanne de recirculation des gaz d'échappement, **caractérisé en ce qu'**il comprend les étapes suivantes :
a) on modifie la position d'une vanne de commande de recirculation des gaz d'échappement,
b) on calcule au moyen d'une cartographie (18) l'avance à l'allumage théorique en fonction du régime du moteur et de la charge du moteur sans tenir compte d'une recirculation des gaz d'échappement,
c) on détermine au moyen d'un dispositif de gestion de l'avance à l'allumage une avance à l'allumage optimale, l'avance à l'allumage optimale déterminée étant l'avance à l'allumage la plus élevée avant détection d'un phénomène de cliquetis dans le moteur (2) obtenu d'un capteur de cliquetis (11),
d) on calcule un critère de diagnostic, à partir de l'avance à l'allumage théorique et de l'avance à l'allumage optimale, et
e) on compare le critère de diagnostic à un seuil de défaillance de la vanne de commande à partir des moyens de comparaison (21), les moyens de comparaison (21) comprenant une pluralité de seuils de défaillance en fonction de la position d'ouverture de la vanne (13).

2. Procédé de contrôle selon la revendication 1, **caractérisé en ce qu'**il comprend en outre une première étape dans laquelle on détecte si des conditions du diagnostic sont réunies, les conditions de diagnostic comprenant au moins une condition choisie parmi une condition portant sur le régime moteur qui doit être sensiblement constant pendant une durée prédéfinie, et une condition sur la charge du moteur qui doit être sensiblement constante pendant une durée prédéfinie.

3. Procédé de contrôle au moyen d'un dispositif de contrôle selon l'une des revendications 1 et 2, le dispositif de contrôle étant doté de moyens d'itération, le procédé comprenant les phases suivantes :
h) on remet à zéro le compteur,
i) on modifie la position de la vanne de commande, on calcule au moyen de la cartographie l'avance à l'allumage théorique en fonction du régime du moteur et de la charge du moteur sans tenir compte d'une recirculation des gaz d'échappement, on détermine au moyen du dispositif de gestion de l'avance à l'allumage une avance à l'allumage optimale, l'avance à l'allumage optimale déterminée étant l'avance à l'allumage la plus élevée avant détection d'un phénomène de cliquetis dans le moteur (2), et on calcule un critère de diagnostic, à partir de l'avance à l'allumage théorique et de l'avance à l'allumage optimale ,
j) on mémorise la valeur du critère de diagnostic obtenu lors de la phase i),
k) on incrémente la valeur retenue par le compteur d'une valeur,
l) on compare la valeur retenue par le compteur au nombre d'itérations, s'il est inférieur ou égal au nombre d'itérations, on retourne à la phase i),
m) on calcule la moyenne des critères de diagnostic mémorisés lors des phases j), et
n) on compare la moyenne de la phase m) avec le seuil de défaillance de la vanne de commande.

4. Procédé de contrôle selon la revendication 3, dans lequel le dispositif de contrôle comprend en outre des moyens d'affichage, le procédé de contrôle comprenant une dernière étape dans laquelle on signale une défaillance de la vanne de commande, à l'aide des moyens d'affichage, si le critère de diagnostic dépasse le seuil de défaillance.

5. Procédé de contrôle selon l'une quelconque des revendications 1 à 4, dans laquelle le dispositif de gestion de l'avance à l'allumage comprend un capteur de cliquetis apte à détecter l'apparition d'un phénomène de cliquetis dans le moteur, l'étape d) comprenant les sous-étapes suivantes :
p) on détermine une avance à l'allumage initiale, à partir de la quantité de gaz d'échappement introduite dans la conduite d'admission, et on l'applique à la bougie d'allumage,
q) si le capteur détecte la présence d'un phénomène de cliquetis, on passe directement à la sous-étape t),
r) on augmente l'avance à l'allumage appliquée d'une valeur prédéfinie, et on applique cette nouvelle avance à l'allumage au moteur,
s) on retourne à la sous-étape q), et
t) on maintient l'avance à l'allumage appliquée inchangée, et on définit l'avance à l'allumage optimale comme étant égale à cette valeur.

6. Moteur à combustion interne (2) comprenant au moins une bougie d'allumage(9), un dispositif de gestion de l'avance à l'allumage (10) pour déterminer et appliquer une avance à l'allumage optimale de la bougie d'allumage (9), le dispositif de gestion de l'avance à l'allumage (10) comprenant un capteur de cliquetis (11) apte à détecter l'apparition d'un phénomène de cliquetis dans le moteur (2), l'avance à l'allumage optimale déterminée par le dispositif de gestion (10) étant l'avance à l'allumage la plus élevée avant détection par le capteur de cliquetis (11) d'un phénomène de cliquetis dans le moteur (2), un dispositif de recirculation des gaz d'échappement (12) équipé d'une vanne de commande de recirculation des gaz (13), un dispositif de contrôle (1) comprenant :
- des premiers moyens d'actionnement (17) configurés pour forcer l'ouverture et la fermeture de la vanne de commande (13), et
- une cartographie (18) dans laquelle sont stockées des valeurs d'avance à l'allumage théorique en fonction du régime du moteur et de la charge du moteur sans tenir compte d'une recirculation des gaz d'échappement,
- des premiers moyens de calcul (19) configurés pour exécuter les étapes du procédé selon l'une quelconque des revendications 1 à 5.

## Patentansprüche

1. Verfahren zum Steuern eines Verbrennungsmotors mit Fremdzündung zum Erkennen eines Ausfalls eines Abgasrückführungsventils,
**dadurch gekennzeichnet, dass** es die folgenden Schritte umfasst:
a) Ändern der Position eines Abgasrückführungsregelventils,
b) Berechnen mittels eines Kennfeldes (18) des theoretischen Zündzeitpunkts in Abhängigkeit von der Motordrehzahl und der Motorlast ohne Berücksichtigung einer Abgasrückführung,
c) Bestimmen mittels einer Vorrichtung zum Verwalten des Zündzeitpunkts eines optimalen Zündzeitpunkts, wobei der bestimmte optimale Zündzeitpunkt der höchste Zündzeitpunkt vor dem Erkennen eines Klopfphänomens in dem Motor (2) ist, das durch einen Klopfsensor (11) erhalten wird,
d) Berechnen eines Diagnosekriterums aus dem theoretischen Zündzeitpunkt und dem optimalen Zündzeitpunkt, und
e) Vergleichen des Diagnosekriteriums mit einem Ausfallschwellenwert des Regelventils aus Vergleichsmitteln (21), die Vergleichsmittel (21) umfassend eine Vielzahl von Ausfallschwellenwerten in Abhängigkeit von der Öffnungsposition des Ventils (13).

2. Steuerverfahren nach Anspruch 1, **dadurch gekennzeichnet, dass** es ferner einen ersten Schritt umfasst, bei dem erkannt wird, ob Diagnosebedingungen erfüllt sind, die Diagnosebedingungen umfassend mindestens eine Bedingung, die aus einer Bedingung bezüglich der Motordrehzahl, die für eine vordefinierte Dauer im Wesentlichen konstant sein muss, und einer Bedingung bezüglich der Motorlast ausgewählt wird, die für eine vordefinierte Dauer im Wesentlichen konstant sein muss.

3. Verfahren zum Steuern mittels einer Steuervorrichtung nach einem der Ansprüche 1 und 2, wobei die Steuervorrichtung mit Iterationsmitteln ausgestattet ist, das Verfahren umfassend die folgenden Phasen:
h) Zurücksetzen des Zählers auf null,
i) Ändern der Position des Regelventils, Berechnen mittels des Kennfeldes des theoretischen Zündzeitpunkts in Abhängigkeit von der Motordrehzahl und der Motorlast ohne Berücksichtigung einer Abgasrückführung, Bestimmen mittels der Vorrichtung zum Verwalten des Zündzeitpunkts eines optimalen Zündzeitpunkts, wobei der bestimmte optimale Zündzeitpunkt der höchste Zündzeitpunkt vor dem Erkennen eines Klopfphänomens in dem Motor (2) ist, und Berechnen eines Diagnosekriteriums aus dem theoretischen Zündzeitpunkt und dem optimalen Zündzeitpunkt,
j) Speichern des Diagnosewerts, der in Phase i) erhalten wird,
k) Inkrementieren des Werts, der durch den Zähler festgehalten wird, um einen Wert,
I) Vergleichen des Werts, der durch den Zähler festgehalten wird, mit der Anzahl der Iterationen, wenn er kleiner oder gleich der Anzahl der Iterationen ist, Zurückkehren zu der Phase i),
m) Berechnen des Durchschnitts der Diagnosekriterien, die in den Phasen j) gespeichert werden, und
n) Vergleichen des Durchschnitts der Phase m) mit dem Ausfallschwellenwert des Regelventils.

4. Steuerverfahren nach Anspruch 3, wobei die Steuervorrichtung ferner Anzeigemittel umfasst, das Steuerverfahren umfassend einen letzten Schritt, bei dem ein Ausfall des Regelventils mithilfe der Anzeigemittel signalisiert wird, wenn das Diagnosekriterium den Ausfallschwellenwert überschreitet.

5. Steuerverfahren nach einem der Ansprüche 1 bis 4, wobei die Vorrichtung zum Verwalten des Zündzeitpunkts einen Klopfsensor umfasst, der geeignet ist, um das Auftreten eines Klopfphänomens in dem Motor zu erkennen, Schritt d) umfassend die folgenden Teilschritte:
p) Bestimmen eines anfänglichen Zündzeitpunkts aus der Menge an Abgas, das in das Ansaugrohr eingeleitet wird, und Anwenden darauf auf die Zündkerze,
q) wenn der Sensor das Vorhandensein eines Klopfphänomens erkennt, direktes Übergehen zu Teilschritt t),
r) Erhöhen des angewendeten Zündzeitpunkts um einen vorgegebenen Wert und Anwenden dieses neuen Zündzeitpunkts auf den Motor,
s) Zurückkehren zu Teilschritt q), und
t) unverändertes Beibehalten des angewandten Zündzeitpunkts und Definieren des optimalen Zündzeitpunkts als gleich diesem Wert.

6. Verbrennungsmotor (2), umfassend mindestens eine Zündkerze (9), eine Vorrichtung zum Verwalten des Zündzeitpunkts (10) zum Bestimmen und Anwenden eines optimalen Zündzeitpunkts der Zündkerze (9), die Vorrichtung zum Verwalten des Zündzeitpunkts (10) umfassend einen Klopfsensor (11), der geeignet ist, um das Auftreten eines Klopfphänomens in dem Motor (2) zu erkennen, wobei der optimale Zündzeitpunkt, der durch die Verwaltungsvorrichtung (10) bestimmt wird, der höchste Zündzeitpunkt ist, bevor der Klopfsensor (11) ein Klopfphänomen in dem Motor (2) erkennt, eine Abgasrückführungsvorrichtung (12), die mit einem Gasrückführungsregelventil (13) ausgestattet ist, und eine Steuervorrichtung (1), umfassend:
- erste Betätigungsmittel (17), die zum Erzwingen des Öffnens und des Schließens des Regelventils (13) konfiguriert sind, und
- ein Kennfeld (18), in dem Werte des theoretischen Zündzeitpunkts in Abhängigkeit von der Motordrehzahl und der Motorlast ohne Berücksichtigung einer Abgasrückführung abgespeichert sind,
- erste Berechnungsmittel (19), die zum Ausführen der Schritte des Verfahrens nach einem der Ansprüche 1 bis 5 konfiguriert sind.

## Claims

1. Method for monitoring a spark ignition internal combustion engine to detect a failure of an exhaust gas recirculation valve, **characterized in that** the method comprises the following steps:
a) modifying the position of an exhaust gas recirculation control valve,
b) using a map (18) to calculate the theoretical ignition advance based on engine speed and engine load, without taking exhaust gas recirculation into account,
c) using an ignition advance management device to determine an optimum ignition advance, the optimum ignition advance determined being the highest ignition advance before a knocking effect is detected in the engine (2), obtained from a knock sensor (11),
d) calculating a diagnostic criterion on the basis of the theoretical ignition advance and the optimum ignition advance, and
e) comparing the diagnostic criterion with a control valve failure threshold on the basis of comparison means (21), the comparison means (21) comprising a plurality of failure thresholds based on the opening position of the valve (13).

2. Monitoring method according to claim 1, **characterized in that** it further comprises a first step in which it is detected whether diagnostic conditions are met, the diagnostic conditions comprising at least one condition selected from a condition relating to the engine speed which must be substantially constant for a predefined period of time, and a condition relating to the engine load which must be substantially constant for a predefined period of time.

3. Method for monitoring by means of a monitoring device according to one of claims 1 and 2, the monitoring device being provided with iteration means, the method comprising the following steps:
h) resetting the counter to zero,
i) modifying the position of the control valve, using the map to calculate the theoretical ignition advance based on engine speed and engine load, without taking exhaust gas recirculation into account, using the ignition advance management device to determine an optimum ignition advance, the optimum ignition advance determined being the highest ignition advance before a knocking effect is detected in the engine (2), and calculating a diagnostic criterion on the basis of the theoretical ignition advance and the optimum ignition advance,
j) storing the value of the diagnostic criterion obtained in step i),
k) increasing the value held by the counter by an increment of one,
l) comparing the value held by the counter with the number of iterations; if it is less than or equal to the number of iterations, returning to step i),
m) calculating the average of the diagnostic criteria stored in steps j), and
n) comparing the average of step m) with the control valve failure threshold.

4. Monitoring method according to claim 3, wherein the monitoring device further comprises display means, the monitoring method comprising a final step in which a failure of the control valve is reported, using the display means, if the diagnostic criterion exceeds the failure threshold.

5. Monitoring method according to any of claims 1 to 4, wherein the ignition advance management device comprises a knock sensor which is able to detect the occurrence of a knocking effect in the engine, step d) comprising the following sub-steps:
p) determining an initial spark advance on the basis of the quantity of exhaust gas introduced into the intake pipe, and applying it to the spark plug,
q) if the sensor detects the presence of a knocking effect, going directly to sub-step t),
r) increasing the applied ignition advance by a predefined value, and applying this new ignition advance to the engine,
s) returning to sub-step q), and
t) keeping the applied ignition advance unchanged, and defining the optimum ignition advance as equal to this value.

6. Internal combustion engine (2) comprising at least one spark plug (9), an ignition advance management device (10) for determining and applying an optimum ignition advance of the spark plug (9), the ignition advance management device (10) comprising a knock sensor (11) which is able to detect the occurrence of a knocking effect in the engine (2), the optimum ignition advance determined by the management device (10) being the highest ignition advance before a knocking effect is detected in the engine (2) by the knock sensor (11), an exhaust gas recirculation device (12) equipped with a gas recirculation control valve (13), a monitoring device (1) comprising:
- first actuating means (17) configured to force the control valve (13) open and closed, and
- a map (18) in which theoretical ignition advance values are stored based on engine speed and engine load, without taking exhaust gas recirculation into account,
- first calculation means (19) configured to perform the steps of the method according to any of claims 1 to 5.
